Europäisches Patentamt

European Patent Office

Office européen des brevets

(11) Publication number: 0 635 782 A1

# EUROPEAN PATENT APPLICATION

(21) Application number: 94305259.7

(22) Date of filing: 18.07.94

(51) Int. Cl.6: **G06F 7/50**, G06F 5/06, G06F 12/02, G06F 9/355

(30) Priority: 22.07.93 JP 181126/93

(43) Date of publication of application:
25.01.95 Bulletin 95/04

(84) Designated Contracting States:
DE FR GB IT

(71) Applicant: MATSUSHITA ELECTRIC INDUSTRIAL CO., LTD.
1006, Ohaza Kadoma
Kadoma-shi,
Osaka 571 (JP)

(72) Inventor: Saito, Yoshiko
60-3-102, Ooguchidoori,
Kanagawa-ku
Yokohama (JP)
Inventor: Uesugi, Mitsuru
13-33, 3-14-6, Kamoi,
Midori-ku
Yokohama (JP)
Inventor: Asano, Nobuo
4-15-404, Wakabadai,
Asahi-ku
Yokohama (JP)
Inventor: Ishikawa, Toshihiro
170-1-B203, Kami Hoshikawa-cho,
Hodogaya-ku
Yokohama (JP)

(74) Representative: Senior, Alan Murray
J.A. KEMP & CO.,
14 South Square,
Gray's Inn
London WC1R 5LX (GB)

## (54) Method and system for address access.

(57) Different multi-bit addresses extending from a stating address to an ending address are sequentially assigned to respective memory segments in a designated area of a memory which stores data. A fixed-value register stores fixed-value data representative of a predetermined unit address increment, and outputs the fixed-value data. A multi-bit adder adds output data from an address pointer register and the output fixed-value data from the fixed-value register, and outputs data representative of a result of the addition. The address pointer register stores starting-address data representative of the starting address and outputs the starting-address data to the memory and the adder during an initial stage. The address pointer register stores the output data from the adder and outputs the stored data to the memory and the adder during a stage following the initial stage. The adder includes adding circuit elements corresponding to respective bits. In the adder, propagation of a carry from a given one of the adding circuit elements to a subsequent one of the adding circuit elements is inhibited so that an address represented by the output data from the adder returns from the ending address to the starting address when an address represented by the output data from the address pointer register reaches the ending address.

FIG. 4

This invention relates to a method and a system for address access which are usable in a digital signal processor.

Some types of digital signal processing include a step of iteratively accessing a designated area of a memory. During such a step, memory segments in the designated area are sequentially and cyclically accessed in response to an address signal. The memory segments in the designated area have sequential addresses respectively. During the above-indicated step, an address pointer system generates a signal (an address signal) representing an address which is periodically incremented from a starting address to an ending address in the designated area of the memory. The address signal is fed to the memory to execute an access to the memory segment having the corresponding address. After the address represented by the address signal reaches the end address, it is reset to the starting address. Then, periodic incrementing of the address is repeated.

As will be described later, prior-art address pointer systems tend to be complicated in structure.

It is an object of this invention to provide an improved method of address access.

It is another object of this invention to provide an improved system for address access.

A first aspect of this invention provides a method of accessing a given address region which comprises the steps of updating a value of an address pointer for accessing a portion of the given address region; using the value of the address pointer and a given increment in calculation for said updating; and controlling a carry in said calculation to provide cyclic change of an accessed address.

A second aspect of this invention provides an address access apparatus comprising an adder for updating an address pointer, and for controlling a carry caused in said updating; and a register for storing said address pointer.

A third aspect of this invention provides an apparatus for accessing a designated area in a memory which stores data, wherein different multi-bit addresses extending from a starting address to an ending address are sequentially assigned to respective memory segments in the designated area, the apparatus comprising an address pointer register; a fixed-value register for storing fixed-value data representative of a predetermined unit address increment and outputting the fixed-value data; and a multi-bit adder for adding output data from the address pointer register and the output fixed-value data from the fixed-value register, and outputting data representative of a result of said adding; wherein the address pointer register stores starting-address data representative of the starting address and outputs the starting-address data to the memory and the adder during an initial stage, and the address pointer register stores the output data from the adder and outputs the stored data to the memory and the adder during a stage following the initial stage; and wherein the adder comprises adding circuit elements corresponding to respective bits, and means for inhibiting propagation of a carry from a given one of the adding circuit elements to a subsequent one of the adding circuit elements so that an address represented by the output data from the adder returns from the ending address to the starting address when an address represented by the output data from the address pointer register reaches the ending address.

The present invention will be further described hereinafter with reference to the following description of an exemplary embodiment and the accompanying drawings, in which:-

Fig. 1 is a block diagram of a first prior-art address pointer system;

Fig. 2 is a flowchart of operation of the prior-art system in Fig. 1;

Fig. 3 is a block diagram of a second prior-art address pointer system;

Fig. 4 is a block diagram of an address pointer system according to an embodiment of this invention;

Fig. 5 is a diagram of a data memory in Fig. 4;

Fig. 6 is a diagram of an adder in Fig. 4;

Fig. 7 is a flowchart of operation of the address pointer system in Fig. 4.

Prior-art address pointer systems will be described hereinafter for a better understanding of this invention.

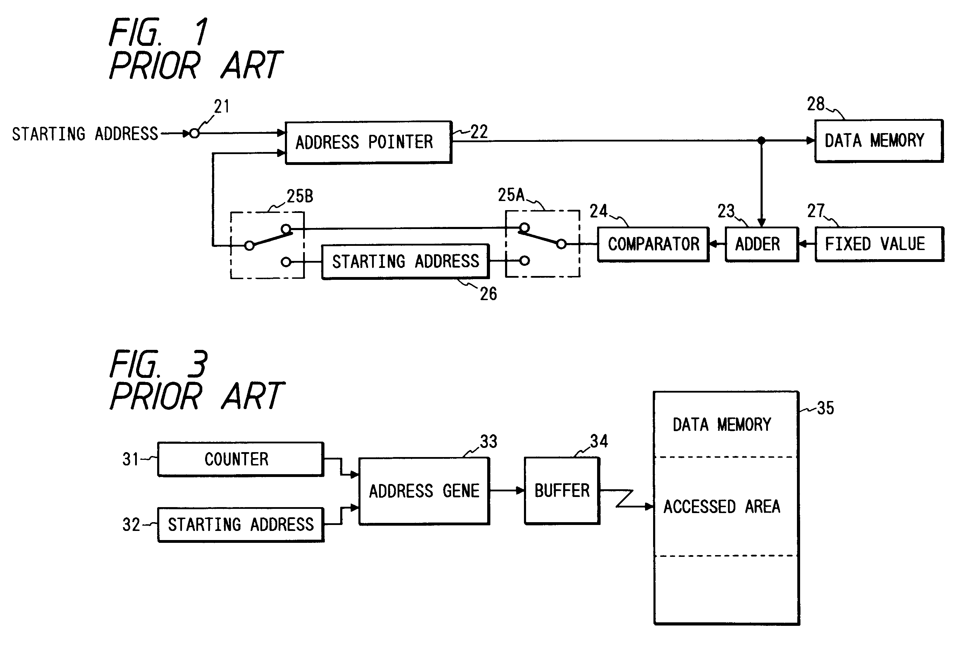

Fig. 1 shows a first prior-art address pointer system which operates on a memory 28 storing data. AS shown in Fig. 1, the first prior-art system includes an input terminal 21, an address pointer register 22, an adder 23, a comparator 24, switches 25A and 25B, a starting-address register 26, and a fixed-value register 27.

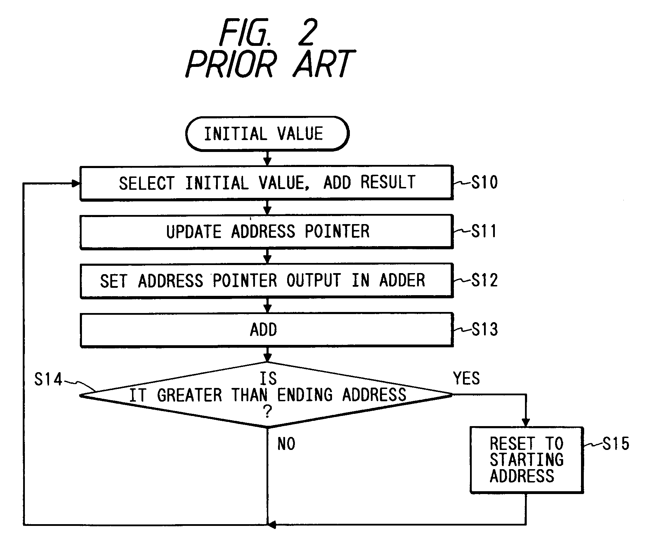

Fig. 2 is a flowchart of operation of the prior-art system in Fig. 1. With reference to Fig. 2, at steps S10 and S11, first data (first address data) representing a starting address in a designated area of the data memory 28 is fed to the address pointer register 22 via the input terminal 21, and is written into the address pointer register 22 as initial-value data.

The address pointer register 22 outputs the first address data to the data memory 28 as an address signal so that an access can be given to a memory segment in the designated area of the data memory 28 which has the starting address. Simultaneously, at a step S12, the address pointer register 22 outputs the first address data to the adder 23 and sets the first address data therein. At a suitable stage, the starting-address data (the first address data) is written into the starting-address register 26.

The adder 23 receives fixed-value data from the fixed-value register 27. At a step S13, the device 23 adds the first address data and the fixed-value data to update the first address data into second address data. In other words, the address represented by address data is updated and incremented from the starting address to a subsequent address (a new address) which depends on the fixed-value data.

The comparator 24 receives the second address data from the adder 23. In addition, the comparator 24 receives information or data of an ending address in the designated area of the data memory 28. At a step S14, the comparator 24 compares the second address data and the ending-address information to decide whether or not the address represented by the second address reaches the ending address. When the address represented by the second address data does not reach the ending address, the switches 25A and 25B are changed to such positions that the second address data is transmitted from the comparator 24 to the address pointer register 22. Thus, at the steps S10 and S11, the second address data is fed to the address pointer register 22, and is written into the address pointer register 22. In the address pointer register 22, the first address data is updated into or replaced with the second address data.

The address pointer register 22 outputs the second address data to the data memory 28 as an address signal so that an access can be given to a memory segment in the designated area of the data memory 28 which has the address equal to the address represented by the second address data. Simultaneously, at a step S12, the address pointer register 22 outputs the second address data to the adder 23 and sets the second address data therein.

In the prior-art system of Fig. 1, a sequence of the above-indicated processes is reiterated until the address represented by the output data from the adder 23 reaches the ending address. As a result, all memory segments in the designated area of the data memory 28 can be sequentially accessed.

When the address represented by the output data from the adder 23 reaches the ending address, the switches 25A and 25B are changed to such positions that the starting-address data is transmitted from the sting-address register 26 to the address pointer register 22. Thus, at a step S15 and the later steps S10 and S11, the starting-address data is fed to the address pointer register 22, and is written into the address pointer register 22. In the address pointer register 22, the present address data (the ending-address data) is updated into or replaced with the starting-address data. AS a result, an access to the designated area of the memory 28 can be repeated.

The prior-art system of Fig. 1 tends to be complicated in structure since the comparator 24, the switches 25A and 25B, and the starting-address register 26 are provided therein.

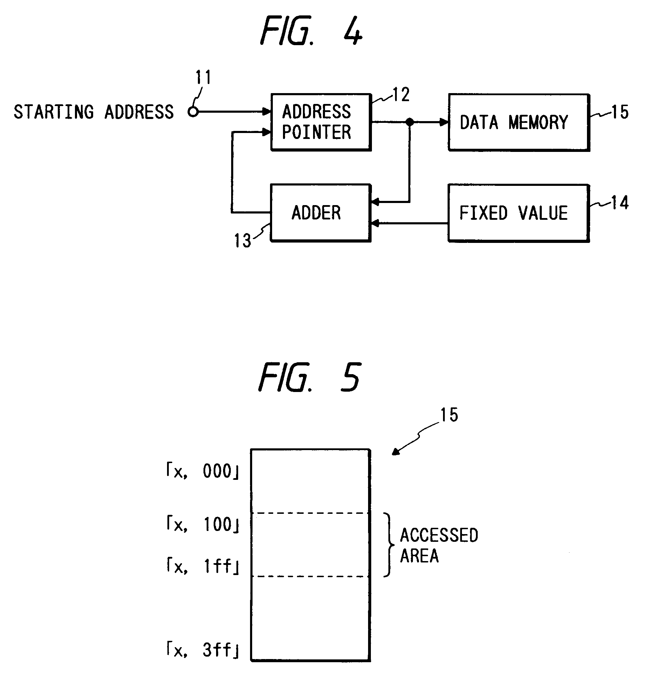

Fig. 3 shows a second prior-art address pointer system which is disclosed in Japanese published unexamined patent application 63-158622. The second prior-art system in Fig. 3 operates on a memory 35 storing data. AS shown in Fig. 3, the second prior-art system includes a counter 31, a starting-address register 32, an address generating routine 33, and an address pointer buffer 34.

In the second prior-art system of Fig. 3, it is assumed that a stating address in a designated area (an accessed area) of the data memory 35 is expressed as $2^n \times m$ where "n" and "m" denote integers. In addition, an ending address in the designated area of the data memory 35 is expressed as $2^n \times m + 2^n-1$. In this case, to iteratively access the designated area of the data memory 35, the address represented by a signal fed to the data memory 35 is required to cyclically and sequentially vary from $2^n \times m$ to $2^n \times m + 2^n-1$ one by one.

The counter 31 includes a $2^n$ counter having "n" bits. The starting-address register 32 stores data representing the starting address in the designed area of the data memory 35. The address generating routine 33 is a program or a software designed to generate address data in response to the output data from the counter 31 and the starting-address data from the starting-address register 32. The address generating routine 33 writes the generated address data into the address pointer buffer 34. Then, the address pointer buffer 34 outputs the address data to the data memory 35.

The prior-art system of Fig. 3 operates as follows. During a first period, the value represented by the output data from the counter 31 is equal to "0". The address generating routine 33 adds the output data from the counter 31 and the starting-address data from the starting-address register 32. Since the output data from the counter 31 corresponds to "0", address data resulting from the addition represents an address equal to the starting address ($2^n \times m$). The address generating routine 33 writes the address data into the address pointer buffer 34. The address pointer buffer 34 outputs the address data to the data memory 35 so that an access can be given to a memory segment in the designated area of the data memory 35 which has the starting address.

When the first period is replaced by a second period, the value represented by the output data from the counter 31 is incremented to "1". During the second period, the value represented by the output data from the counter 31 is "1". The address generating routine 33 adds the output data from the counter 31 and the starting-address data from the starting-address register 32 Since the output data from the counter 31 corresponds to "1", address data resulting from the addition represents an address immediately following the starting address. The address generating routine 33 writes the address data into the address pointer buffer 34. The address pointer buffer 34 outputs the address data to the data memory 35 so that an access can be given to a memory segment in the designated area of the data memory 35 which has an address immediately following the starting address.

The above-indicated processes are periodically reiterated so that subsequent and later memory segments in the designated area of the data memory 35 can be sequentially accessed.

During a $2^n$-th period, the value represented by the output data from the counter 31 is "$2^n-1$". The address generating routine 33 adds the output data from the counter 31 and the starting-address data from the starting-address register 32. Since the output data from the counter 31 corresponds to "$2^n-1$", address data resulting from the addition represents the ending address ($2^n \times m + 2^n-1$). The address generating routine 33 writes the address data into the address pointer buffer 34. The address pointer buffer 34 outputs the address data to the data memory 35 so that an access can be given to a memory segment in the designated area of the data memory 35 which has the ending address.

When the $2^n$-th period is replaced by a ($2^n+1$)-th period, the value represented by the output data from the counter 31 is returned or reset to "0" since the counter 31 is of the $2^n$ type. Accordingly, during the ($2^n+1$)-th period, the prior-art system of Fig. 3 operates as in the previously-indicated first period so that an access can be given again to the memory segment in the designated area of the data memory 35 which has the starting address.

The prior-art system of Fig. 3 tends to be complicated in structure since the counter 31, the starting-address register 32, and the address generating routine 33 are provided therein.

This invention will now be described in detail. Fig. 4 shows an address pointer system according to an embodiment of this invention. The address pointer system in Fig. 4 operates on a memory 15 storing data. AS shown in Fig. 4, the address pointer system includes an input terminal 11, an address pointer register 12, an adder 13, and a fixed-value register 14. The input terminal 11 leads to the input side of the address pointer register 12. The output side of the address pointer register 12 is connected to the data memory 15. In addition, the output side of the address pointer register 12 is connected to a first input side of the adder 13. The output side of the fixed-value register 14 is connected to a second input side of the adder 13. The output side of the adder 13 is connected to the input side of the address pointer register 12.

The data memory 15 has segments to which different 10-bit addresses are assigned respectively. Accordingly, the address pointer register 12 and the adder 13 are of 10-bit types.

The address pointer system in Fig. 4 is designed for reiterative accesses to a given-see area in the data memory 15. It is now assumed that, as shown in Fig. 5, a starting address in a designated area (an accessed area) of the data memory 15 is expressed as "x, 100" in hexadecimal notation where "x" denotes an arbitrary value. In addition, an ending address in the designated area of the data memory 15 is expressed as "x. 1ff" in hexadecimal notation. It should be noted that "x, 100" in hexadecimal notation agrees with "xx00000000" in binary notation while "x, 1ff" in hexadecimal notation agrees with "xx11111111" in binary notation.

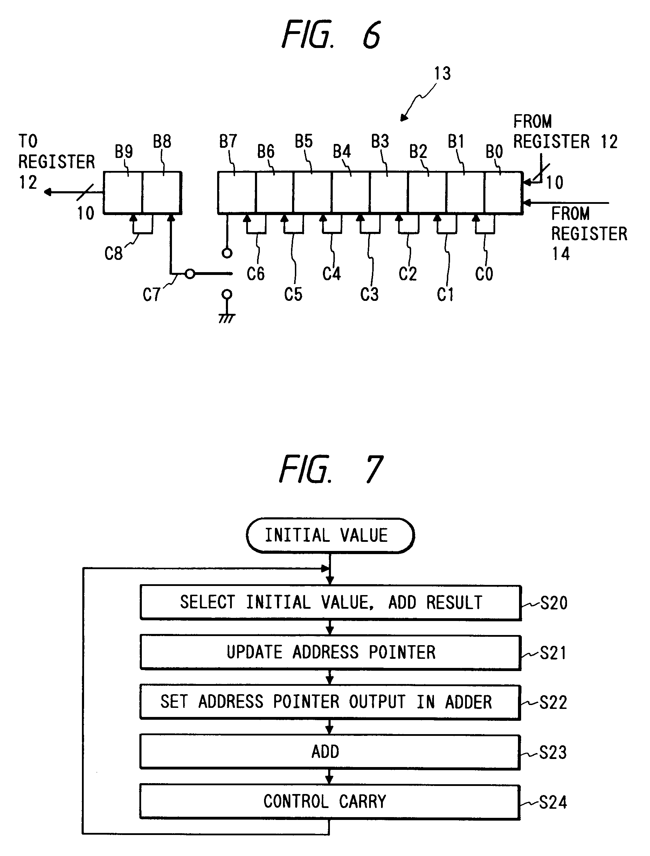

AS shown in Fig. 6, the adder 13 has ten segments (adding circuit elements) B0, B1, B2, B3, B4, B5, B6, B7, B8, and B9 corresponding to first, second, third, fourth, fifth, sixth, seventh, eighth, ninth, and tenth bits respectively. It should be noted that the first bit corresponds to the lowest bit while the tenth bit corresponds to the highest bit. Neighboring segments B0, B1, B2, B3, B4, B5, B6, B7, B8, and B9 are connected via carry propagation paths C0, C1, C2, C3, C4, C5, C6, C7, and C8. The carry propagation path C7 between the eighth-bit segment B7 and the ninth-bit segment B8 is disconnected or broken. Accordingly, any carry is not propagated from the eighth-bit segment B7 to the ninth-bit segment B8.

Fig. 7 is a flowchart of operation of the address pointer system in Fig. 4. With reference to Fig. 7, at successive steps S20 and S21, first data (first address data) representing the starting address (x, 100) in the designated area of the data memory 15 is fed to the address pointer register 12 via the input terminal 11, and is written into the address pointer register 12 as initial-value data.

The address pointer register 12 outputs the first address data to the data memory 15 as an address signal so that an access can be given to a memory segment in the designated area of the data memory 15 which has the starting address (x, 100). Simultaneously, at a step S22 following the step S21, the address pointer register 12 outputs the first address data to the adder 13 and sets the first address data therein.

The adder 13 receives fixed-value data from the fixed-value register 14. The fixed-value data represents a value corresponding to a difference between neighboring addresses in the data memory 15 which equals "1" or "0000000001" in binary notation. In other words, the value represented by the fixed-value data corresponds to a unit address increment, that is, a change of an address to a next address. At a step S23 following the step S22, the device 13 adds the first address data and the fixed-value data to update the first address data into second address data. In other words, the address represented by address data is updated and incremented from the starting address (x, 100) to a subsequent address (x, 101) which depends on the fixed-value data.

At a step S24 following the step S23, the adder 13 executes carry control regarding the result of the addition. Then, at the subsequent steps S20 and S21, the second address data is fed from the adder 13 to the address pointer register 12, and is written into the address pointer register 12. In the address pointer register 12, the first address data is updated into or replaced with the second address data.

The address pointer register 12 outputs the second address data to the data memory 15 as an address signal so that an access can be given to a memory segment in the designated area of the memory 28 which has the address (x, 101) equal to the address represented by the second address data. It should be noted that the address (x, 101) immediately follows the starting address (x, 100). Simultaneously, at the step S22, the address pointer register 12 outputs the second address data to the adder 13 and sets the second address data therein.

In the address pointer system of Fig. 4, a sequence of the above-indicated processes is reiterated until the address represented by the output data from the address pointer register 12 reaches the ending address (x, 1ff). AS a result, all memory segments in the designated area of the data memory 15 can be sequentially accessed.

When the address represented by the output data from the address pointer register 12 reaches the ending address (x, 1ff), the address pointer system of Fig. 4 operates as follows. At the step S23, the device 13 adds the ending-address data and the fixed-value data to update the ending-address data into new address data. In other words, the address represented by address data is updated from the ending address (x, 1ff) to a new address which depends on the fixed-value data. At the step S24, the adder 13 executes carry control regarding the result of the addition. In more detail, the addition of the ending address (x, 1ff) and the fixed value "1" in hexadecimal notation means the addition of the ending address "xx11111111" and the fixed value "0000000001" in binary notation. In the adder 13, the addition of "xx11111111" and "0000000001" causes carries propagated from the segments B0-B7 to the subsequent segments B1-B8 respectively. In fact, since the carry propagation path between the eighth-bit segment B7 and the ninth-bit segment B8 is disconnected, any carry is not propagated from the eighth-bit segment B7 to the ninth-bit segment B8. In other words, the propagation of a carry from the eighth-bit segment B7 to the ninth-bit segment B8 is prevented or inhibited. Therefore, the new address data generated by the adder 13 agrees with "xx00000000" which is the same as the starting address. In this way, the address data generated by the adder 13 is returned or reset to the starting-address data. Then, at the steps S20 and S21, the starting-address data is fed from the adder 13 to the address pointer register 12, and is written into the address pointer register 12. In the address pointer register 12, the ending-address data is updated into or replaced with the starting-address data. AS a result, during a subsequent period, an access to the designated area of the memory 15 is repeated.

The address pointer system of Fig. 4 is advantageous over the prior-art systems of Figs. 1 and 3 regarding structural simplicity.

A switch for selecting either data fed via the input terminal 11 or data fed from the adder 13 may be provided in or outside the address pointer register 12. In this case, at an initial stage of operation of the address pointer system, the switch operates to select the data fed via the input terminal 11. During later stages, the switch operates to select the data fed via the adder 13.

It should be noted that the address pointer register 12 may be similar in structure to the address pointer register 22 in the prior-art system of Fig. 1.

## Claims

1.  A method of accessing a given address region, the method comprising the steps of:
    updating a value of an address pointer for accessing a portion of the given address region;
    using the value of the address pointer and a predetermined increment in calculation for said updating; and
    controlling a carry in said calculation to provide cyclic change of the accessed address.

2.  An address access apparatus comprising:
    an adder for updating an address pointer, and for controlling a carry caused in said updating; and

a register for storing said address pointer.

3. An apparatus according to claim 2, wherein said adder comprises means for providing cyclic change of an accessed address in response to said controlling of the carry.

4. An apparatus for accessing a designated area in a memory which stores data, wherein different multi-bit addresses extending from a starting address to an end address are sequentially assigned to respective memory segments in the designated area, the apparatus comprising:

an address pointer register;

a fixed-value register for storing fixed-value data representative of a predetermined unit address increment and outputting the fixed-value data; and

a multi-bit adder for adding output data from the address pointer register and the output fixed-value data from the fixed-value register, and outputting data representative of a result of said addition;

wherein the address pointer register stores starting-address data representative of the starting address and outputs the starting-address data to the memory and the adder during an initial stage, and the address pointer register stores the output data from the adder and outputs the stored data to the memory and the adder during a stage following the initial stage; and

wherein the adder comprises adding circuit elements corresponding to respective bits, and meas for inhibiting propagation of a carry from a given one of the adding circuit elements to a subsequent one of the adding circuit elements so that an address represented by the output data from the adder returns from the ending address to the starting address when an address represented by the output data from the address pointer register reaches the end address.

## FIG. 1
## PRIOR ART

STARTING ADDRESS ⟶ 21

ADDRESS POINTER 22 ⟶ DATA MEMORY 28

25B   25A   24   23   27

COMPARATOR   ADDER   FIXED VALUE

STARTING ADDRESS   26

## FIG. 3
## PRIOR ART

31 — COUNTER

32 — STARTING ADDRESS

ADDRESS GENE 33 ⟶ BUFFER 34

DATA MEMORY 35

ACCESSED AREA

7

# FIG. 2
# PRIOR ART

```
        ( INITIAL VALUE )
               │
               ▼
┌─────────────────────────────────┐
│  SELECT INITIAL VALUE, ADD RESULT│──S10
└─────────────────────────────────┘
               │
               ▼
┌─────────────────────────────────┐
│      UPDATE ADDRESS POINTER      │──S11
└─────────────────────────────────┘
               │
               ▼
┌─────────────────────────────────┐
│  SET ADDRESS POINTER OUTPUT IN ADDER│──S12
└─────────────────────────────────┘
               │
               ▼
┌─────────────────────────────────┐
│               ADD               │──S13
└─────────────────────────────────┘
               │
               ▼
```

S14 ╱ IS ╲ YES
    ╲ IT GREATER THAN ENDING ADDRESS ╱
    ╲           ?           ╱

NO

```
              ┌──────────────┐
              │  RESET TO    │──S15
              │  STARTING    │
              │  ADDRESS     │
              └──────────────┘
```

*FIG. 4*

*FIG. 5*

## FIG. 6

## FIG. 7

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| X | PATENT ABSTRACTS OF JAPAN vol. 13, no. 219 (P-875) 23 May 1989 & JP-A-01 033 645 (NEC) * abstract * | 1-4 | G06F7/50 G06F5/06 G06F12/02 G06F9/355 |
| D,A | PATENT ABSTRACTS OF JAPAN vol. 12, no. 427 (P-784) 11 November 1988 & JP-A-63 158 622 (HITACHI) * abstract * | 1-4 | |
| A | EP-A-0 198 470 (NEC) * page 1, line 11 - page 3, line 2; figure 1 * | 1 | |

TECHNICAL FIELDS
SEARCHED     (Int.Cl.6)

G06F

The present search report has been drawn up for all claims

| Place of search | Date of completion of the search | Examiner |
|---|---|---|
| THE HAGUE | 14 October 1994 | Cohen, B |